# EUROPEAN PATENT SPECIFICATION

(11) **EP 3 243 745 B1**
(45) Date of publication and mention of the grant of the patent: **10.07.2019**
(21) Application number: 17170906.6
(22) Date of filing: 12.05.2017
(51) Int. Cl.: B64C 11/28, B64C 29/02, B64C 39/06, B64C 39/02

(54) **FORWARD FOLDING ROTOR BLADES**
NACH VORNE KLAPPENDE ROTORBLÄTTER
PALES DE ROTOR À PLIAGE VERS L'AVANT

(30) Priority: 13.05.2016 US 201662336432 P
(43) Date of publication of application: 15.11.2017
(73) Proprietor: Bell Helicopter Textron Inc., Fort Worth, TX 76101 (US)
(72) Inventor: FENNY, Carlos Alexander, Fort Worth, TX Texas 76112 (US); OLSON, Rohn Lee, Hurst, TX Texas 76054 (US); ZAHASKY, Andrew James, North Richland Hills, TX Texas 76180 (US)
(74) Representative: Barker Brettell LLP

(56) References cited:
- EP-A2- 2 733 068
- WO-A1-91/07314
- CN-A- 105 438 464
- DE-A1- 2 854 977
- DE-A1- 3 240 995
- JP-A- 2014 240 242
- US-A1- 2010 072 325
- US-A1- 2015 274 290
- US-A1- 2016 031 555

## Description

### CROSS-REFERENCE TO RELATED APPLICATIONS

This application claims priority to U.S. Provisional Application Serial No. 62/336,432, filed May 13, 2016.

### TECHNICAL FIELD OF THE INVENTION

The present invention relates in general to the field of aircraft design, and more particularly, to forward folding rotor blades.

### STATEMENT OF FEDERALLY FUNDED RESEARCH

None.

### BACKGROUND OF THE INVENTION

Without limiting the scope of the invention, its background is described in connection with aircraft. U.S. Patent No. 9,156,545 discloses an example of backward folding rotor blades. Backward folding rotor blades may, however, not be desirable for some aircraft designs. As a result, there is a need for forward folding rotor blades.

US 2010/072325 discloses a VTOL aircraft with rotors mounted on wing-tip pods which can be tilted from the vertical to the horizontal aft position. The rotors are then stopped in the axial-flow condition and indexed to an azimuth position, aft of the wing trailing-edge. Rotor blades are then folded forward (blade-tips upstream of rotor-hubs) and locked into grooves in the tip-pods. The main feature of the autorotative aft rotor tilt is that a soft-inplane rotor can be used, which reduces rotor weight. The blade-folding axis is also the blade-flapping axis.

WO 91/07314 discloses an apparatus for folding and locking the rotor blades, comprising a power actuator which rotates the blades and locking means for securing the blade in the deployed position and securing the blades against rotation of the angle of attack during and when the blades are folded. The apparatus also provides the complete fairing of the blades at their connections to the rotary drive hub and a motor-operated door in the fairing can be opened and closed to allow easy and fast folding and redeployment of the blades.

JP 2014 240242 A discloses a vertical take-off and landing flight vehicle which comprises: a plurality of inner rotor units arranged on a first circumference separated from the center of an airframe by a predetermined distance; a plurality of outer rotor units arranged on a second circumference separated from the center of the airframe by a predetermined distance larger than the predetermined distance; and control means for drivingly controlling the inner rotor units and the outer rotor units. Flotation of the air frame is performed by operating mainly the inner rotor units and attitude control of the airframe is performed by operating mainly the outer rotor units.

US 2016/031555 A1 discloses an aerial vehicle adapted for vertical takeoff and landing using a set of wing mounted thrust producing elements and a set of tail mounted rotors for takeoff and landing. This document also discloses an aerial vehicle which is adapted to vertical takeoff with the rotors in a rotated, take-off attitude then transitions to a horizontal flight path, with the rotors rotated to a typical horizontal configuration. The aerial vehicle uses different configurations of its wing mounted rotors and propellers to reduce drag in all flight modes.

### SUMMARY OF THE INVENTION

An aspect of the invention is set out in claim 1.

A rotor blade rotation system includes two or more rotor blades, each rotor blade in mechanical communication with a hub and pivotable about an axis of rotation, a bearing plate comprising a rotating portion and a non-rotating portion, a fold linkage coupled to the rotating portion of the bearing plate and in mechanical communication with the rotor blade, and an actuator coupled to the non-rotating portion of the bearing plate and operable to reposition the bearing plate from a first position to a second position such that the folding links pivot the rotor blades from a deployed position to a forward folded position.

An aircraft may include a fuselage, a wing coupled to the fuselage, one or more engines or motors disposed within or attached to the wing or fuselage, a shaft operable connected to the one or more engines or motors, a hub in mechanical communication with the shaft, two or more rotor blades, each rotor blade in mechanical communication with the hub and pivotable about an axis of rotation, a bearing plate comprising a rotating portion and a non-rotating portion, a fold linkage coupled to the rotating portion of the bearing plate and in mechanical communication with the rotor blade, and an actuator coupled to the non-rotating portion of the bearing plate and operable to reposition the bearing plate from a first position to a second position such that the folding links pivot the rotor blades from a deployed position to a forward folded position.

### BRIEF DESCRIPTION OF THE DRAWINGS

The novel features believed characteristic of the present application are set forth in the appended claims. However, the system itself, as well as a preferred mode of use, and further objectives and advantages thereof, will best be understood by reference to the following detailed description when read in conjunction with the accompanying drawings, in which the leftmost significant digit(s) in the reference numerals denote(s) the first figure in which the respective reference numerals appear, wherein:
FIG. 1A is a perspective view of a closed wing aircraft in accordance with one embodiment of the present invention;
FIG. 1B is a front elevation view of the closed wing aircraft of FIG. 1A;
FIG. 1C is a rear elevation view of the closed wing aircraft of FIG. 1A;
FIG. 1D is a right side elevation view of the closed wing aircraft of FIG. 1A;
FIG. 1E is a left side elevation view of the closed wing aircraft of FIG. 1A;
FIG. 1F is a top plan view of the closed wing aircraft of FIG. 1A;
FIG. 1G is a bottom plan view of the closed wing aircraft of FIG. 1A;
FIG. 2A is a perspective view of a closed wing aircraft in accordance with one embodiment of the present invention in which the rotors on the spokes are deployed and the rotors on the closed wing are folded forward;
FIG. 2B is a front elevation view of the closed wing aircraft of FIG. 2A;
FIG. 2C is a rear elevation view of the closed wing aircraft of FIG. 2A;
FIG. 2D is a right side elevation view of the closed wing aircraft of FIG. 2A;
FIG. 2E is a left side elevation view of the closed wing aircraft of FIG. 2A;
FIG. 2F is a top plan view of the closed wing aircraft of FIG. 2A;
FIG. 2G is a bottom plan view of the closed wing aircraft of FIG. 2A;
FIGS. 3A and 3B are perspective views of a rotor system in which the two or more rotor blades are in a deployed state (FIG. 3A) and a forward folded state (FIG. 3B) in accordance with one embodiment of the present invention; and FIGS. 3C and 3D are cutaway views of a rotor system in which the two or more rotor blades are in a deployed state (FIG. 3C) and a forward folded state (FIG. 3D) in accordance with one embodiment of the present invention.

### DETAILED DESCRIPTION OF THE INVENTION

While the system of the present application is susceptible to various modifications and alternative forms, specific embodiments thereof have been shown by way of example in the drawings and are herein described in detail.
To facilitate the understanding of this invention, a number of terms are defined below. Terms defined herein have meanings as commonly understood by a person of ordinary skill in the areas relevant to the present invention. Terms such as "a", "an" and "the" are not intended to refer to only a singular entity, but include the general class of which a specific example may be used for illustration. The terminology herein is used to describe specific embodiments of the invention, but their usage does not delimit the invention, except as outlined in the claims.

Illustrative embodiments of the present application are described below. In the interest of clarity, not all features of an actual implementation are described in this specification. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

As used herein, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

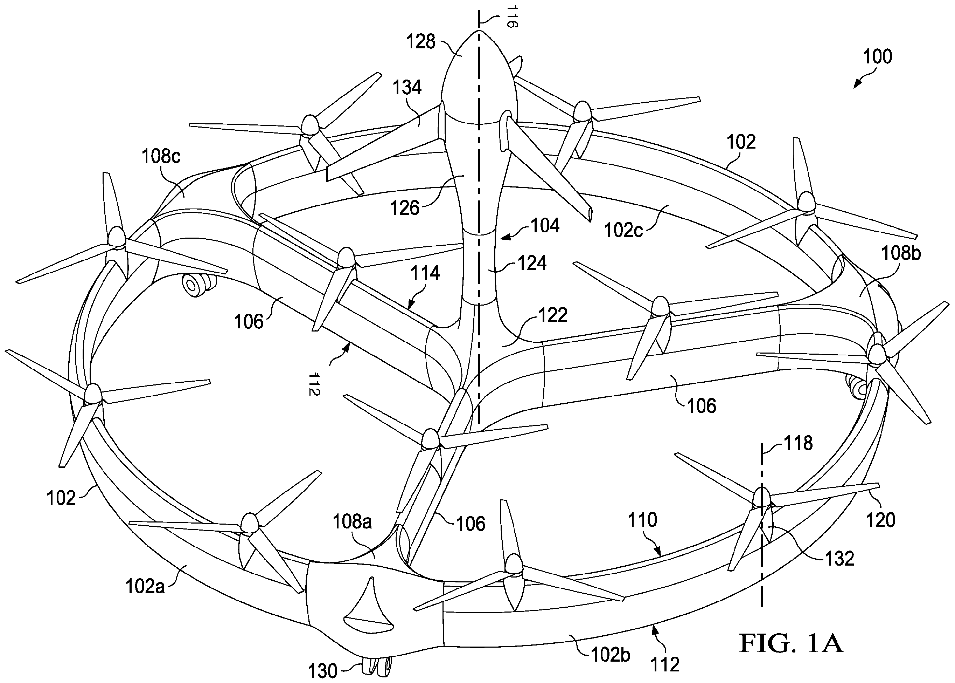

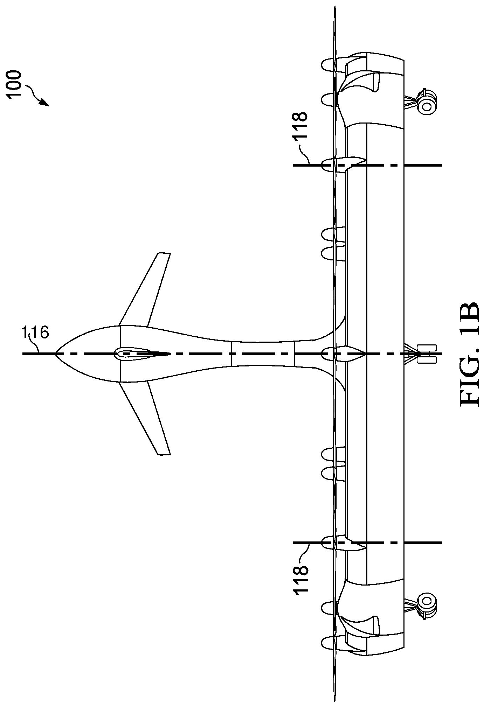

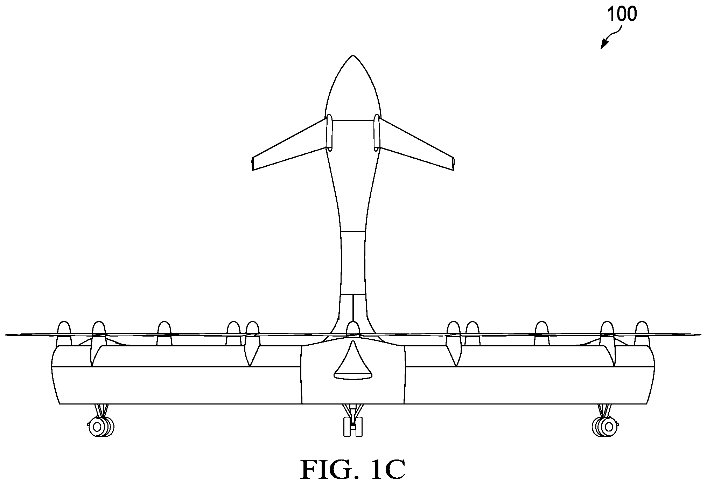

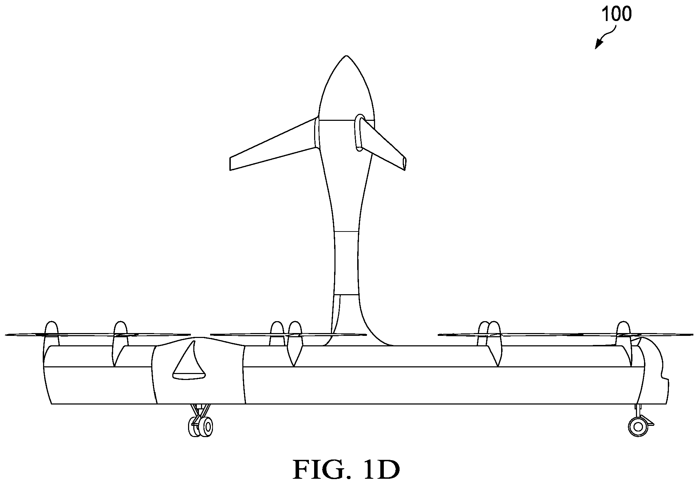

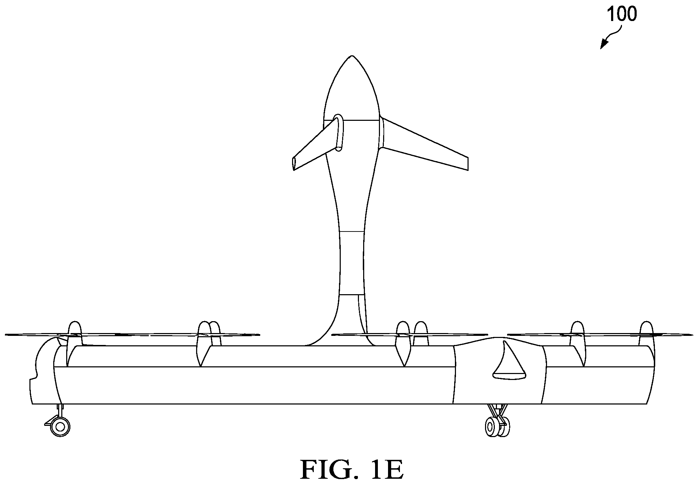

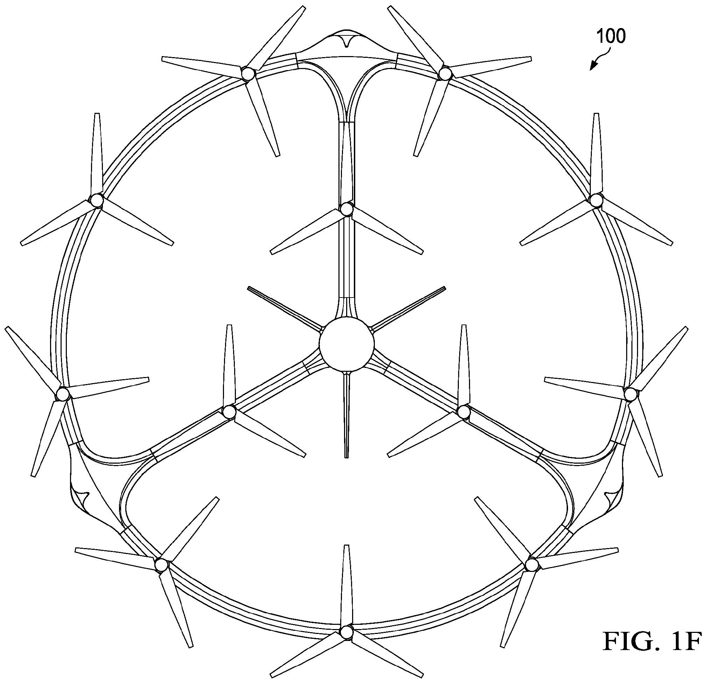

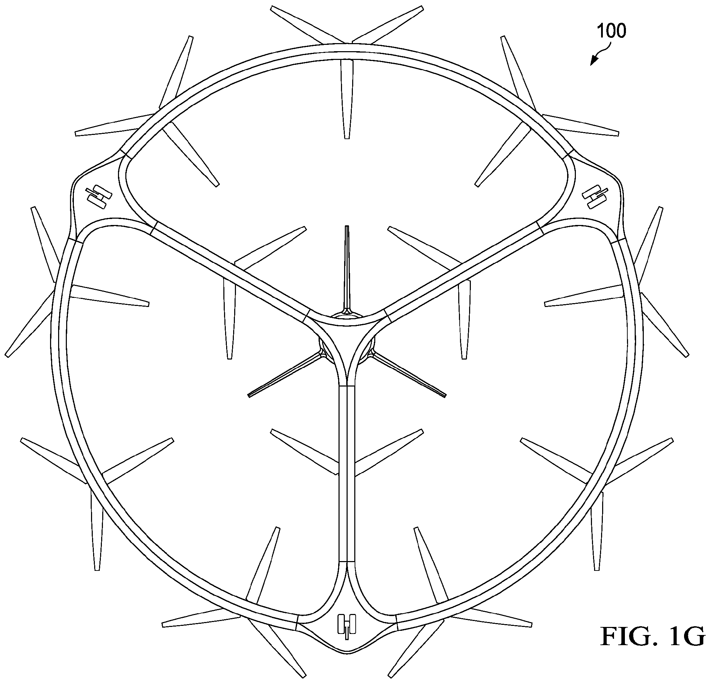

Now referring to FIGS. 1A-1G, various views of a closed wing aircraft 100 in accordance with one embodiment of the present invention are shown. More specifically, FIG. 1A is a perspective view, FIG. 1B is a front elevation view, FIG. 1C is a rear elevation view, FIG. 1D is right side elevation view, FIG. 1E is a left side elevation view, FIG. 1F is a top plan view, and FIG. 1G is a bottom plan view. This closed wing aircraft 100 features the following: 1) Tail sitter configuration provides for conversion to airplane mode without reconfiguration; 2) Circular wing optimizes propulsion, structural, aerodynamic, and center of gravity (CG) requirements; 3) Gearboxes and drive train are completely eliminated; 4) Rotor cyclic and collective controls are replaced by variable speed constant pitch propellers; and 5) Yaw in vertical flight and roll in hover mode are provided by trailing edge surfaces on the spokes connecting the closed wing to the fuselage.

**The** closed wing aircraft 100 utilizes the ring wing configuration to provide a symmetric matrix distribution of hydraulic or electric motor driven propellers to maximize controllability and provide safety in the even of a hydraulic or electric motor failure. The ring wing also reduces the effects of cross winds during takeoff and landing by minimizing the affected wing area and eliminating induced yaw. In airplane mode flight the ring wing allows the aircraft maintain any roll position in order to position sensors as required. For noise reduction the propellers within the ring provide an acoustic barrier. Structurally, the combination of distributed propulsion and the ring wing minimizes bending moments allowing for lighter and stiffer structure compared with distributed propulsion on straight wings. Engines or fuel/batteries can be housed in the base of the fuselage or at the intersection of the spokes to the ring wing for strength and minimization of weight. Landing gear is positioned at these points for similar reasons.

More specifically, the aircraft 100 can be manned or unmanned and is capable of vertical takeoff and landing, stationary flight and forward flight. The aircraft 100 includes a closed wing 102, a fuselage 104 at least partially disposed within a perimeter of the closed wing 102, and one or more spokes 106 coupling the closed wing 102 to the fuselage 104. The closed wing 102 can be circular-shaped, oval-shaped, triangular-shaped, polygonal-shaped or any other shape suitable for the desired operational and aerodynamic requirements of the aircraft 100. In addition, the closed wing can be made up of a plurality of wing segments 102a, 102b, 102c and wing-spoke intersections or junctions 108a, 108b, 108c connected together. The cross-sectional profile of the closed wing 102 between the leading edge 110 and trailing edge 112 can be a symmetrical airfoil or any desirable aerodynamic shape. The number of spokes 106 can be determined, in part, by the shape and size of the closed wing 102, and the shape, size and payload of the fuselage 104. The cross-sectional profile of the spokes 106 between the leading edge 114 and the trailing edge 112 can be a symmetrical airfoil or any desirable aerodynamic shape. The closed wing 102, the fuselage 104 and the one or more spokes 106 are preferably symmetrically shaped to provide transition between vertical takeoff and landing, stationary flight and forward flight in any direction. However, non-symmetrical shapes can be used. As a result, the shape of the closed wing 102 and number of spokes 106 shown in the figures is only one example and is not intended to limit the scope of the invention. The closed wing 102 may also include one or more doors or removable sections that provide access to the fuselage 104 when the aircraft 100 is in a landed position.

The fuselage 104 may include one or more sections or modules that have a longitudinal axis 116 substantially parallel to a rotational axis 118 of the propellers 120. The shape and length of the fuselage 104 will vary depending on the desired mission and flight characteristics. As a result, the shape and length of the fuselage 104 shown in the figures is only one example and is not intended to limit the scope of the invention. For example, the fuselage 104 may include a rear section or module 122 substantially disposed at a center of the closed wing 102 that provides a fuselage-spoke intersection or junction, a middle section or module 124 connected to the rear section or module 122, a front section or module 126 connected to the middle module 124, and a nose section or module 128 connected to the front section or module 126. Sections or modules 122, 124, 126, 128 can be removably connected to one another, which makes the aircraft 100 configurable for any desired mission or function. In other words, the closed wing 102 and one or more spokes 106 provide a stable flight platform any desired payload. Moreover, the middle 124, front 126 and nose 128 sections or modules can detach, pivot, or retract at least partially into one or more of the other sections or modules for storage or transport of the aircraft 100. The rear 122, middle 124, front 126 and nose 128 sections or modules can be individually configured to be a cockpit module, a cabin module, an escape module, a payload module, a sensor module, a surveillance module, a power source module, a fuel module, or any combination thereof. Note that the nose section or module 128 may contain one or more parachutes.

The aircraft 100 also includes three or more landing gear, pads or skids 130 operably attached to the closed wing 102. Typically, the landing gear, pads or skids 130 will be disposed proximate to the wing-spoke intersections or junctions 108a, 108b, 108c where there is more structural support. The landing gear, pads or skids 130 can be retractable.

One or more engines or motors 132 are disposed within or attached to the closed wing 102, fuselage 104 or spokes 106 in a distributed configuration. Three or more propellers 120 are proximate to the leading edge 110 of the closed wing 102 or the leading edge 114 of the one or more spokes 106, distributed along the closed wing 102 or the one or more spokes 106, and operably connected to the one or more engines or motors 132. In the embodiment shown, nine propellers 120 are disposed proximate to the closed wing 102, and one propeller 120 is disposed proximate to each spoke 106. The propellers 120 can be variable speed constant pitch propellers or other type of propeller. The distribution and number of propellers 120 are designed to provide stability during the failure of one or more propellers 120, or engines or motors 132.

In one embodiment, a source of hydraulic or electric power is disposed within or attached to the closed wing 102, fuselage 104 or spokes 106 and coupled to each of the of hydraulic or electric motors 132 disposed within or attached to the closed wing 102, fuselage 104 or spokes 106. The source of hydraulic or electric power provides sufficient energy density for the aircraft to attain and maintain operations of the aircraft 100. The source of hydraulic or electric power can be one or more batteries, a piston engine, or a turboshaft engine. A controller is coupled to each of the hydraulic or electric motors 132, and one or more processors are communicably coupled to each controller that control an operation and speed of the plurality of hydraulic or electric motors 132. Note that a single source of hydraulic or electric power can drive multiple hydraulic or electric motors 132. For example, a source of hydraulic or electric power can be located in the wing-spoke intersections or junctions 108a, 108b, 108c or the rear fuselage 122 where there is more structural support. Hydraulic or electric power distribution systems can be used to transmit the power to the hydraulic or electric motors 132, which in turn drive the propellers 120. The hydraulic or electric motors 132 are selected based on at least one of aerodynamics, propulsive efficiency, structural efficiency, aeroelasticity, or weight of the aircraft. Moreover, the propellers 120, or the engines or motors 132 can be mounted to pivot to provide directional thrust. Similarly, additional thrusters can be disposed on the closed wing 102, fuselage 104 or spokes 106.

One or more flight control surfaces are disposed on or extending from the closed wing 102, spokes 106 or the fuselage 104 to provide improved control and flight characteristics. The one or more control surfaces may include one or more air foils, winglets, elevators or ailerons. For example and as shown in FIGS. 1A-1G, winglets 134 mounted on the forward section or module 126 of the fuselage 104. Note that the one or more airfoils or winglets can be retractable, removable, stowable or variable swept.

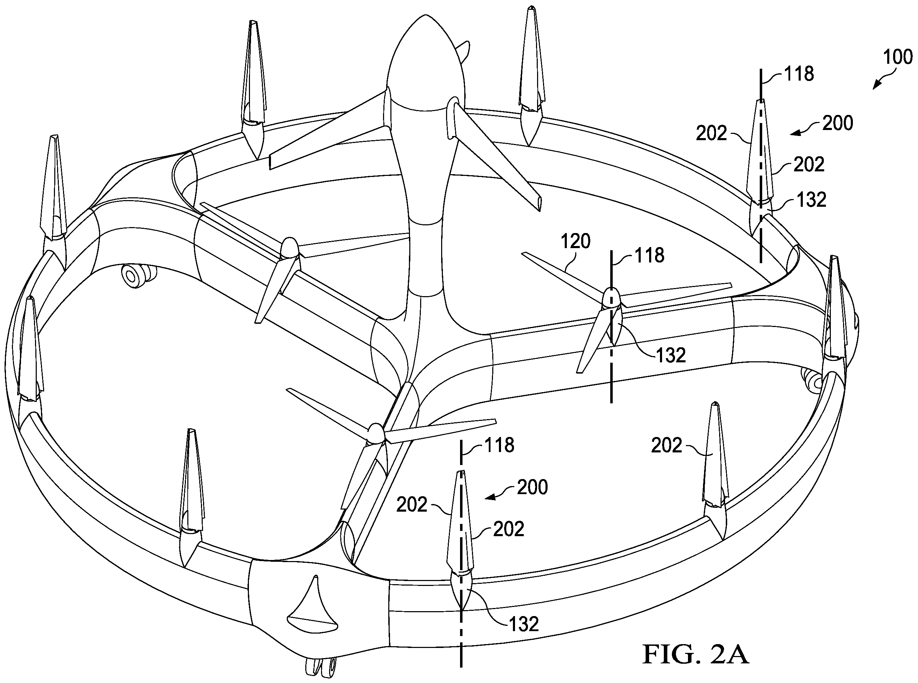

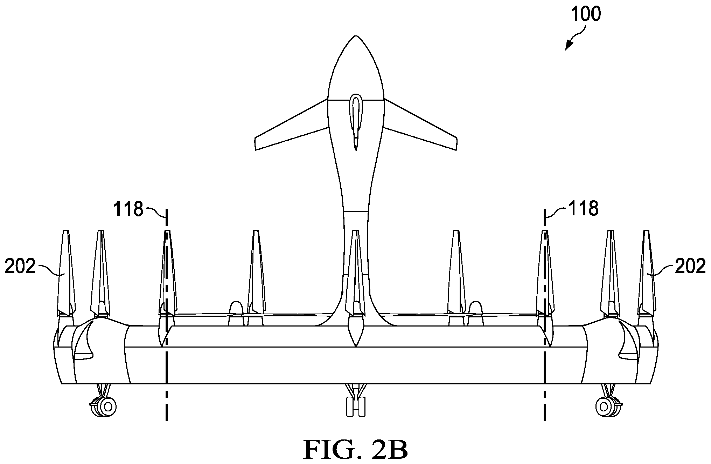

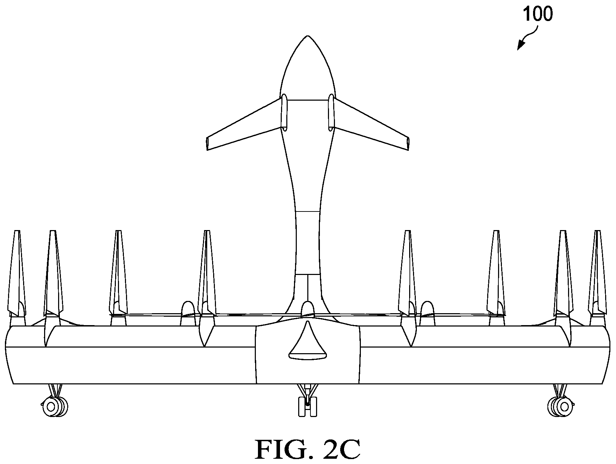

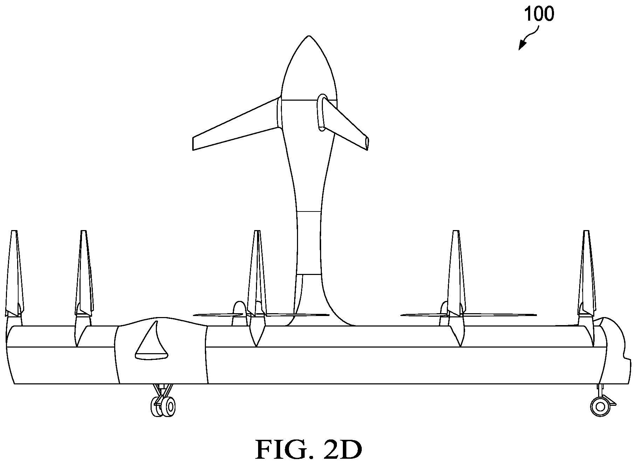

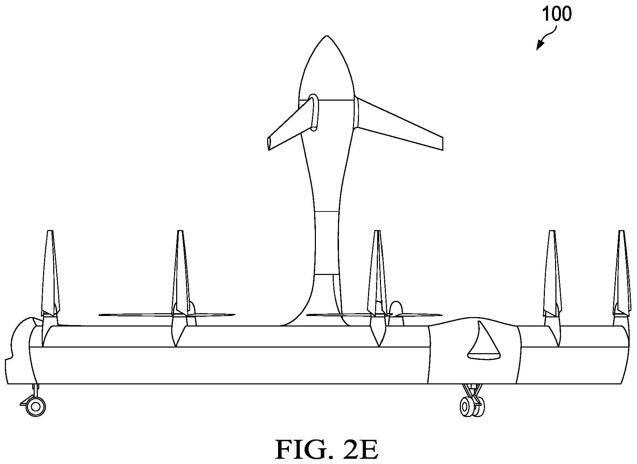

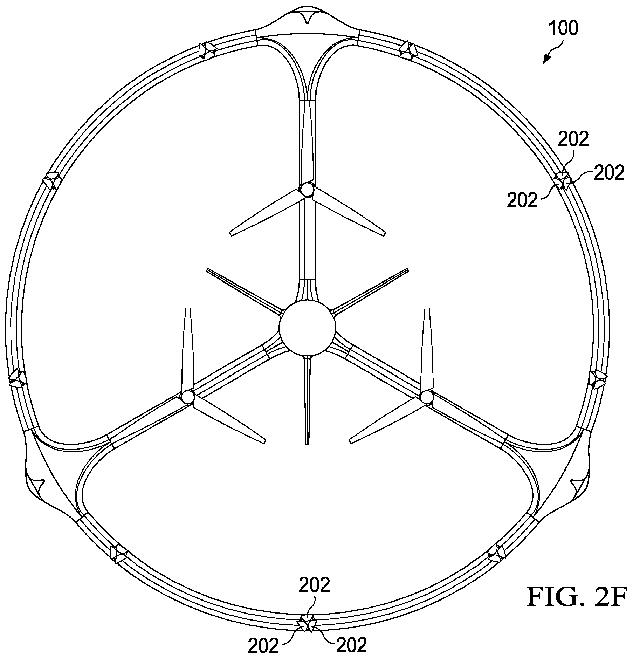

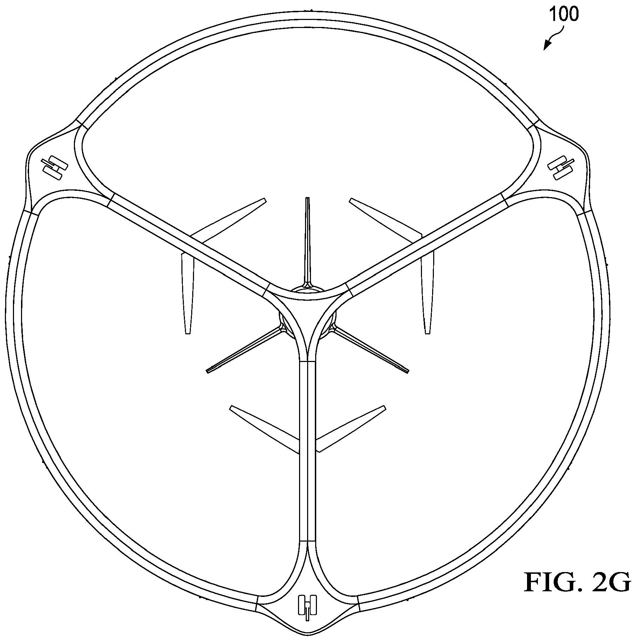

As shown in FIGS. 2A-2G, the propellers 120 can be selectively folded in a forward direction. Each propeller 200 includes two or more rotor blades 202 which are in mechanical communication with a hub and pivotable about an axis of rotation 118.

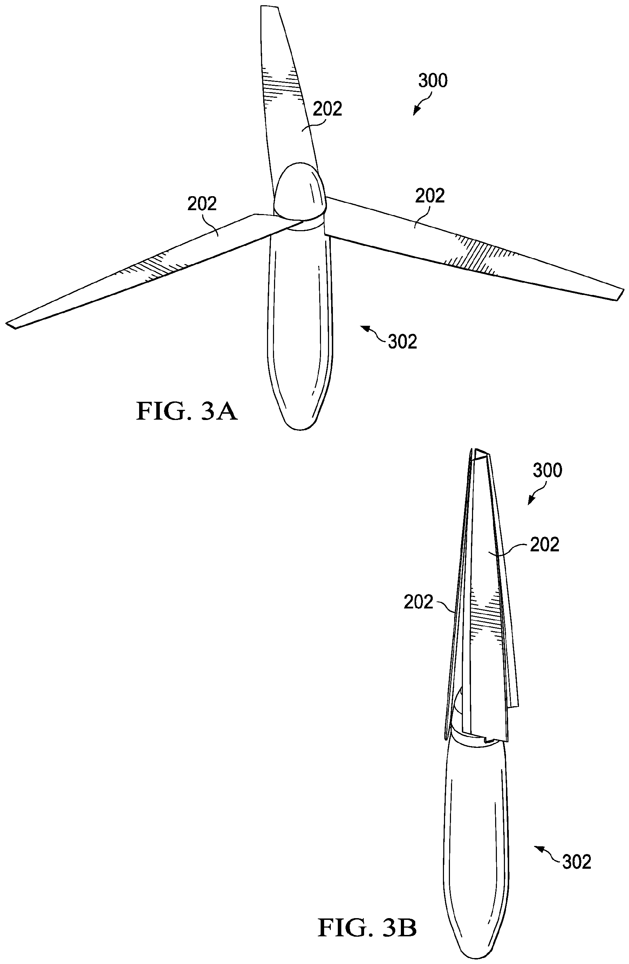

Now also referring to FIGS. 3A and 3B, a nacelle 302 having a rotor system 300 in which the two or more rotor blades 202 are in a deployed state (FIG. 3A) and a forward folded state (FIG. 3B) are shown in accordance with one embodiment of the present invention.

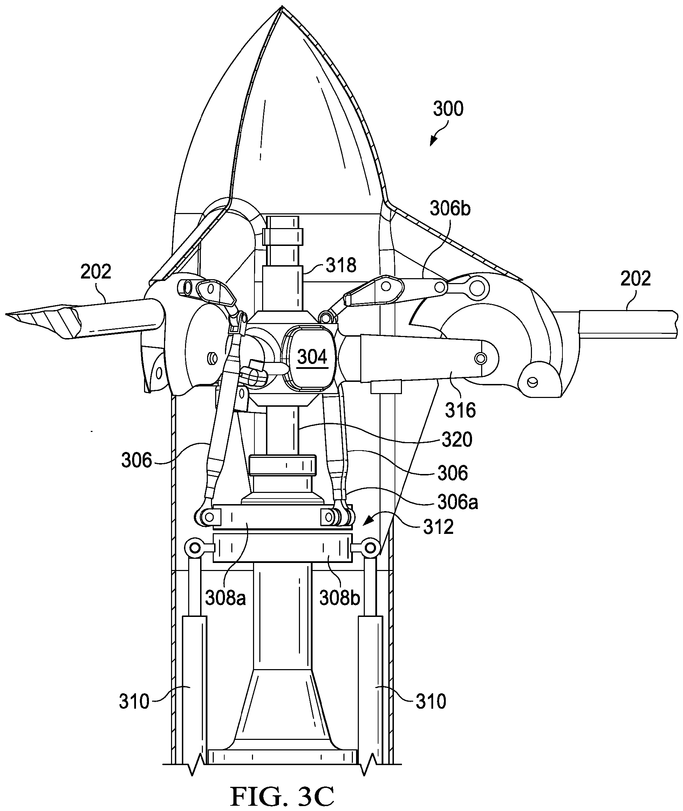

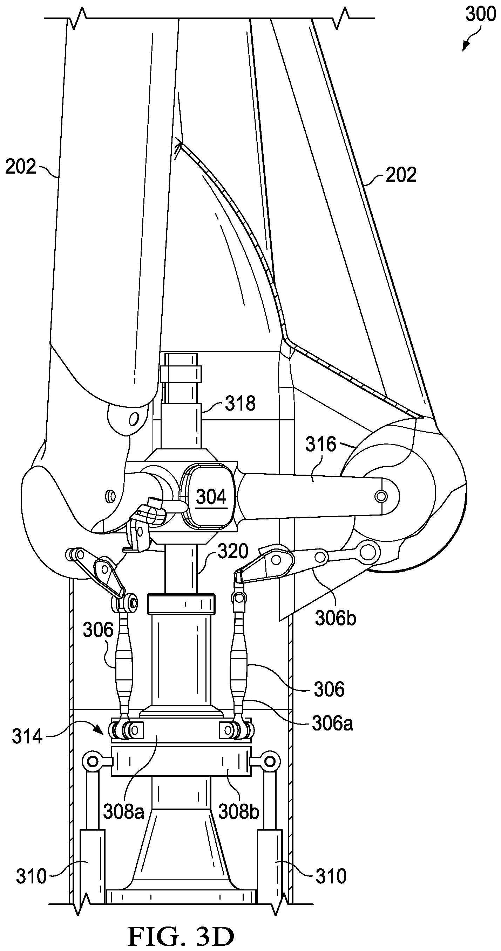

As shown in FIGS. 3C and 3D, cutaway views of a rotor system 300 in which the two or more rotor blades are in a deployed state (FIG. 3C) and a forward folded state (FIG. 3D in accordance with one embodiment of the present are shown. Each propeller 200 includes two or more rotor blades 202 which are in mechanical communication with a hub 304 and pivotable about an axis of rotation. A fold linkage 306 mechanically couples a rotating portion 308a of a bearing plate 308 (collectively 308a and 308b) to the rotor blade 202. The fold linkage 306 is positioned between the bearing plate 308 and the rotor blade 202 such that: 1) repositioning a first end 306a of
the fold linkage 306 towards the hub 304 causes a second end 306b of the fold linkage 306 to pivot the rotor blade 202 towards the bearing plate 308; and 2) repositioning the first end 306a of the fold linkage 306 away from the hub 304 causes a second end 306b of the linkage to pivot the rotor blade 202 towards the hub 304. An actuator 310 is coupled to a non-rotating portion 308b of the bearing plate 308 and is operable to reposition the bearing plate 308 from a first position 312 to a second position 314 such that the folding links 306 pivot the rotor blades 202 from a deployed position to a forward folded position. In the forward folded position, the first position 312 of the bearing plate 308 is closer to the hub 304 than the second position 312 of the bearing plate 308. A grip 316 is disposed between the hub 304 and the rotor blade 202. A lock 318 is operable to selectively couple and decouple the fold linkage 306 and the grip 316, and the hub 304 and the grip 316. The lock 318 is also operable to selectively lock either folding of the rotor blade 202 or flapping movement of the hub 304. As shown in FIG. 3B, a tip of all the rotors 202 can be preloaded together in the forward folded position such that a vibration of the rotors 202 is minimized. Other components may include: 1) a fold lock deployable in a locked position or in an unlocked position, the fold lock operable in the locked position to prevent folding of the rotor blade 202, the fold lock operable in the unlocked position to allow folding of the rotor blade 202; and a flapping lock deployable in a locked position or in an unlocked position, the flapping lock operable in the locked position to prevent flapping movement of the hub 304 relative to the shaft 320, the flapping lock operable in the unlocked position to allow flapping movement of the hub 304 relative to the shaft 320.

Based on the foregoing, the aircraft includes a fuselage, a wing coupled to the fuselage, one or more engines or motors disposed within or attached to the wing or fuselage, a shaft operable connected to the one or more engines or motors, a hub in mechanical communication with the shaft, two or more rotor blades, each rotor blade in mechanical communication with the hub and pivotable about an axis of rotation, a bearing plate comprising a rotating portion and a non-rotating portion, a fold linkage coupled to the rotating portion of the bearing plate and in mechanical communication with the rotor blade, and an actuator coupled to the non-rotating portion of the bearing plate and operable to reposition the bearing plate from a first position to a second position such that the folding links pivot the rotor blades from a deployed position to a forward folded position.

All publications and patent applications mentioned in the specification are indicative of the level of skill of those skilled in the art to which this invention pertains.

The use of the word "a" or "an" when used in conjunction with the term "comprising" in the claims and/or the specification may mean "one," but it is also consistent with the meaning of "one or more," "at least one," and "one or more than one." The use of the term "or" in the claims is used to mean "and/or" unless explicitly indicated to refer to alternatives only or the alternatives are mutually exclusive, although the disclosure supports a definition that refers to only alternatives and "and/or." Throughout this application, the term "about" is used to indicate that a value includes the inherent variation of error for the device, the method being employed to determine the value, or the variation that exists among the study subjects.

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. In embodiments of any of the compositions and methods provided herein, "comprising" may be replaced with "consisting essentially of" or "consisting of". As used herein, the phrase "consisting essentially of" requires the specified integer(s) or steps as well as those that do not materially affect the character or function of the claimed invention. As used herein, the term "consisting" is used to indicate the presence of the recited integer (e.g., a feature, an element, a characteristic, a property, a method/process step or a limitation) or group of integers (e.g., feature(s), element(s), characteristic(s), propertie(s), method/process steps or limitation(s)) only.

**The** term "or combinations thereof as used herein refers to all permutations and combinations of the listed items preceding the term. For example, "A, B, C, or combinations thereof is intended to include at least one of: A, B, C, AB, AC, BC, or ABC, and if order is important in a particular context, also BA, CA, CB, CBA, BCA, ACB, BAC, or CAB. Continuing with this example, expressly included are combinations that contain repeats of one or more item or term, such as BB, AAA, AB, BBC, AAABCCCC, CBBAAA, CABABB, and so forth. The skilled artisan will understand that typically there is no limit on the number of items or terms in any combination, unless otherwise apparent from the context.

As used herein, words of approximation such as, without limitation, "about", "substantial" or "substantially" refers to a condition that when so modified is understood to not necessarily be absolute or perfect but would be considered close enough to those of ordinary skill in the art to warrant designating the condition as being present. The extent to which the description may vary will depend on how great a change can be instituted and still have one of ordinary skilled in the art recognize the modified feature as still having the required characteristics and capabilities of the unmodified feature. In general, but subject to the preceding discussion, a numerical value herein that is modified by a word of approximation such as "about" may vary from the stated value by at least ±1, 2, 3, 4, 5, 6, 7, 10, 12 or 15% from the stated value.

## Claims

1. An aircraft (100), comprising:
a fuselage (104);
a wing (102) coupled to the fuselage;
one or more engines or motors (132) disposed within or attached to the wing or fuselage;
a shaft (320) operably connected to the one or more engines or motors;
a hub (304) in mechanical communication with the shaft;
two or more rotor blades (202), each rotor blade in mechanical communication with the hub and pivotable about an axis of rotation;
a bearing plate (308) comprising a rotating portion (308a) and a non-rotating portion (308b);
a fold linkage (306) mechanically coupling the rotating portion (308a) of the bearing plate (308) to each of the two or more rotor blades (202); and
an actuator (310) coupled to the non-rotating portion (308b) of the bearing plate (308) and operable to reposition the bearing plate (308) from a first position to a second position, wherein the fold linkages (306) pivot the two or more rotor blades (202) from a deployed position to a forward folded position,
wherein the wing (102) comprises a closed wing coupled to the fuselage (104) with one or more spokes (106), and the closed wing provides lift whenever the aircraft (100) is in forward flight, and
the one or more engines or motors (132) provide lift whenever the aircraft (100) is in vertical takeoff and landing and stationary flight and provide thrust whenever the aircraft (100) is in forward flight,
and wherein the closed wing, the fuselage (104) and the one or more spokes (106) are symmetrically shaped to provide transition between vertical takeoff and landing, stationary flight and forward flight in any direction.

2. The aircraft (100) of claim 1, wherein the forward folded position comprises the first position of the bearing plate (308) is closer to the hub (304) than the second position of the bearing plate (308).

3. The aircraft (100) of claim 1 or claim 2, further comprising a grip (316) disposed between the hub (304) and each of the two or more rotor blades (202).

4. The aircraft (100) of claim 3, further comprising a lock (318) operable to either:
i) selectively couple and decouple the fold linkage (306) and the grip (316); or
ii) selectively couple and decouple the hub (304) and the grip (316).

5. The aircraft (100) of any preceding claim, wherein the fold linkage (306) is positioned between the bearing plate (308) and each of the two or more rotor blades (202) such that repositioning a first end of the fold linkage (306) towards the hub (304) causes a second end of the fold linkage (306) to pivot each rotor blade (202) towards the bearing plate (308).

6. The aircraft (100) of any preceding claim, wherein the fold linkage (306) is positioned between the bearing plate (308) and each of the two or more rotor blades (202) such that repositioning a first end of the fold linkage (306) away from the hub (304) causes a second end of the linkage (306) to pivot each rotor blade (202) towards the hub (304).

7. The aircraft (100) of any preceding claim, further comprising a fold lock deployable in a locked position or in an unlocked position, the fold lock operable in the locked position to prevent folding of the two or more rotor blades (202), the fold lock operable in the unlocked position to allow folding of the rotor blades (202).

8. The aircraft (100) of any preceding claim, further comprising a flapping lock deployable in a locked position or in an unlocked position, the flapping lock operable in the locked position to prevent flapping movement of the hub (304) relative to the shaft (320), the flapping lock operable in the unlocked position to allow flapping movement of the hub (304) relative to the shaft (320).

9. The aircraft (100) of any preceding claim, further comprising a lock (318) operable to selectively lock either folding of the rotor blades (202) or flapping movement of the hub (304).

10. The aircraft (100) of any preceding claim, wherein tips of all the rotor blades (202) are preloaded together in the forward folded position such that a vibration of the rotor blades (202) is minimized.

11. The aircraft (100) of claim 1 wherein the closed wing (102), the fuselage (104) and the one or more spokes (106) are not reconfigured for transition between vertical takeoff and landing, stationary flight and forward flight.

## Patentansprüche

1. Flugzeug (100), das Folgendes umfasst:
einen Rumpf (104),
eine Tragfläche (102), die mit dem Rumpf verbunden ist,
ein(en) oder mehrere Triebwerke oder Motoren (132), die innerhalb der Tragfläche oder des Rumpfes angeordnet oder daran befestigt sind,
eine Welle (320), die wirksam mit dem einen oder den mehreren Triebwerken oder Motoren verbunden ist,
eine Nabe (304) in mechanischer Verbindung mit der Welle,
zwei oder mehr Rotorblätter (202), wobei jedes Rotorblatt in mechanischer Verbindung mit der Nabe steht und um eine Drehungsachse drehbar ist,
eine Lagerplatte (308), die einen sich drehenden Abschnitt (308a) und einen sich nicht drehenden Abschnitt (308b) umfasst,
ein Klappgestänge (306), das mechanisch den sich drehenden Abschnitt (308a) der Lagerplatte (308) mit jedem der zwei oder mehr Rotorblätter (202) verbindet, und
einen Stellantrieb (310), der mit dem sich nicht drehenden Abschnitt (308b) der Lagerplatte (308) verbunden und funktionsfähig ist, um die Lagerplatte (308) von einer ersten Stellung zu einer zweiten Stellung zu verlegen,
wobei die Klappgestänge (306) die zwei oder mehr Rotorblätter (202) von einer entfalteten Stellung zu einer nach vorn geklappten Stellung schwenken,
wobei die Tragfläche (102) eine geschlossene Tragfläche umfasst, die mit einer oder mehreren Speichen (106) mit dem Rumpf (104) verbunden ist und die geschlossene Tragfläche Auftrieb bereitstellt, wenn sich das Flugzeug (100) im Vorwärtsflug befindet, und
das/der eine oder die mehreren Triebwerke oder Motoren (132) Auftrieb bereitstellen, wenn sich das Flugzeug (100) in Senkrechtstart und -landung befindet, und Schub bereitstellen, wenn sich das Flugzeug (100) im Vorwärtsflug befindet,
und wobei die geschlossene Tragfläche, der Rumpf (104) und die eine oder die mehreren Speichen (106) symmetrisch geformt sind, um einen Übergang zwischen Senkrechtstart und -landung und Vorwärtsflug in jeder Richtung zu gewährleisten.

2. Flugzeug (100) nach Anspruch 1, wobei die nach vorn geklappte Stellung umfasst, dass die erste Stellung der Lagerplatte (308) der Nabe (304) näher ist als die zweite Stellung der Lagerplatte (308).

3. Flugzeug (100) nach Anspruch 1 oder 2, das ferner ein Blattanschlussstück (316) umfasst, das zwischen der Nabe (304) und jedem der zwei oder mehr Rotorblätter (202) angeordnet ist.

4. Flugzeug (100) nach Anspruch 3, das ferner eine Verriegelung (318) umfasst, die zu Folgendem konfiguriert ist:
i) selektiv das Klappgestänge (306) und das Blattanschlussstück (316) zu verbinden und zu trennen oder
ii) selektiv die Nabe (304) und das Blattanschlussstück (316) zu verbinden und zu trennen.

5. Flugzeug (100) nach einem der vorhergehenden Ansprüche, wobei das Klappgestänge (306) derart zwischen der Lagerplatte (308) und jedem der zwei oder mehr Rotorblätter (202) angeordnet ist, dass ein Verlegen eines ersten Endes des Klappgestänges (306) zu der Nabe (304) hin bewirkt, dass ein zweites Ende des Klappgestänge (306) jedes Rotorblatt (202) zu der Lagerplatte (308) hin schwenkt.

6. Flugzeug (100) nach einem der vorhergehenden Ansprüche, wobei das Klappgestänge (306) derart zwischen der Lagerplatte (308) und jedem der zwei oder mehr Rotorblätter (202) angeordnet ist, dass ein Verlegen eines ersten Endes des Klappgestänges (306) von der Nabe (304) weg bewirkt, dass ein zweites Ende des Klappgestänge (306) jedes Rotorblatt (202) zu der Nabe (304) hin schwenkt.

7. Flugzeug (100) nach einem der vorhergehenden Ansprüche, das ferner eine Klappverriegelung umfasst, die in einer verriegelten Stellung oder in einer entriegelten Stellung einsetzbar ist, wobei die Klappverriegelung in der verriegelten Stellung funktionsfähig ist, um ein Klappen der zwei oder mehr Rotorblätter (202) zu verhindern, wobei die Klappverriegelung in der entriegelten Stellung funktionsfähig ist, um ein Klappen der Rotorblätter (202) zu ermöglichen.

8. Flugzeug (100) nach einem der vorhergehenden Ansprüche, das ferner eine Schlagverriegelung umfasst, die in einer verriegelten Stellung oder in einer entriegelten Stellung einsetzbar ist, wobei die Schlagverriegelung in der verriegelten Stellung funktionsfähig ist, um eine Schlagbewegung der Nabe (304) im Verhältnis zu der Welle (320) zu verhindern, wobei die Schlagverriegelung in der entriegelten Stellung funktionsfähig ist, um eine Schlagbewegung der Nabe (304) im Verhältnis zu der Welle (320) zu ermöglichen.

9. Flugzeug (100) nach einem der vorhergehenden Ansprüche, das ferner eine Verriegelung (318) umfasst, die funktionsfähig ist, um entweder ein Klappen der der Rotorblätter (202) oder eine Schlagbewegung der Nabe (304) selektiv zu verriegeln.

10. Flugzeug (100) nach einem der vorhergehenden Ansprüche, wobei Spitzen aller Rotorblätter (202) zusammen in der nach vorn geklappten Stellung derart vorbelastet sind, dass eine Vibration der Rotorblätter (202) minimiert wird.

11. Flugzeug (100) nach Anspruch 1, wobei die geschlossene Tragfläche (102), der Rumpf (104) und die eine oder die mehreren Speichen (106) für einen Übergang zwischen Senkrechtstart und -landung und Vorwärtsflug nicht neu konfiguriert werden.

## Revendications

1. Aéronef (100), comprenant :
un fuselage (104) ;
une aile (102) couplée au fuselage ;
un ou plusieurs machines ou moteurs (132) disposés dans l'aile ou le fuselage ou attachés à ceux-ci ;
un arbre (320) raccordé en fonctionnement aux un ou plusieurs machines ou moteurs ;
un moyeu (304) en communication mécanique avec l'arbre ;
deux pales de rotor (202) ou plus, chaque pale de rotor étant en communication mécanique avec le moyeu et pouvant pivoter autour d'un axe de rotation ;
une plaque de palier (308) comprenant une portion de rotation (308a) et une portion de non rotation (308b) ;
une liaison de pliage (306) couplant mécaniquement la portion de rotation (308a) de la plaque de palier (308) à chacune des deux pales de rotor (202) ou plus ; et
un actionneur (310) couplé à la portion de non rotation (308b) de la plaque de palier (308) et actionnable pour repositionner la plaque de palier (308) d'une première position à une seconde position,
dans lequel les liaisons de pliage (306) pivotent les deux pales de rotor (202) ou plus d'une position déployée à une position pliée vers l'avant,
dans lequel l'aile (102) comprend une aile fermée couplée au fuselage (104) avec un ou plusieurs rayons (106), et l'aile fermée fournit une portance chaque fois que l'aéronef (100) est en vol vers l'avant, et
les un ou plusieurs machines ou moteurs (132) fournissent une portance chaque fois que l'aéronef (100) est en décollage vertical et atterrissage et vol stationnaire et fournissent une poussée chaque fois que l'aéronef (100) est en vol vers l'avant,
et dans lequel l'aile fermée, le fuselage (104) et les un ou plusieurs rayons (106) sont formés symétriquement pour fournir une transition entre décollage vertical et atterrissage, vol stationnaire et vol vers l'avant dans toute direction.

2. Aéronef (100) selon la revendication 1, dans lequel la position pliée vers l'avant comprend la première position de la plaque de palier (308) qui est plus près du moyeu (304) que la seconde position de la plaque de palier (308).

3. Aéronef (100) selon la revendication 1 ou la revendication 2, comprenant en outre une poignée (316) disposée entre le moyeu (304) et chacune des deux pales de rotor (202) ou plus.

4. Aéronef (100) selon la revendication 3, comprenant en outre un verrou (318) actionnable pour
i) coupler et découpler sélectivement la liaison de pliage (306) et la poignée (316) ; ou
ii) coupler et découpler sélectivement le moyeu (304) et la poignée (316).

5. Aéronef (100) selon l'une quelconque des revendications précédentes, dans lequel la liaison de pliage (306) est positionnée entre la plaque de palier (308) et chacune des deux pales de rotor (202) ou plus de sorte qu'un repositionnement d'une première extrémité de la liaison de pliage (306) vers le moyeu (304) amène une seconde extrémité de la liaison de pliage (306) à pivoter chaque pale de rotor (202) vers la plaque de palier (308).

6. Aéronef (100) selon l'une quelconque des revendications précédentes, dans lequel la liaison de pliage (306) est positionnée entre la plaque de palier (308) et chacune des deux pales de rotor (202) ou plus de sorte qu'un repositionnement d'une première extrémité de la liaison de pliage (306) loin du moyeu (304) amène une seconde extrémité de la liaison (306) à pivoter chaque pale de rotor (202) vers le moyeu (304).

7. Aéronef (100) selon l'une quelconque des revendications précédentes, comprenant en outre un verrou de pliage déployable dans une position verrouillée ou dans une position déverrouillée, le verrou de pliage étant actionnable dans la position verrouillée pour empêcher un pliage des deux pales de rotor (202) ou plus, le verrou de pliage étant actionnable dans la position déverrouillée pour permettre un pliage des pales de rotor (202).

8. Aéronef (100) selon l'une quelconque des revendications précédentes, comprenant en outre un verrou de battement déployable dans une position verrouillée ou dans une position déverrouillée, le verrou de battement étant actionnable dans la position verrouillée pour empêcher un mouvement de battement du moyeu (304) par rapport à l'arbre (320), le verrou de battement étant actionnable dans la position déverrouillée pour permettre un mouvement de battement du moyeu (304) par rapport à l'arbre (320).

9. Aéronef (100) selon l'une quelconque des revendications précédentes, comprenant en outre un verrou (318) actionnable pour verrouiller sélectivement soit un pliage des pales de rotor (202) soit un mouvement de battement du moyeu (304).

10. Aéronef (100) selon l'une quelconque des revendications précédentes, dans lequel des extrémités de toutes les pales de rotor (202) sont préchargées ensemble dans la position pliée vers l'avant de sorte qu'une vibration des pales de rotor (202) soit minimisée.

11. Aéronef (100) selon la revendication 1, dans lequel l'aile fermée (102), le fuselage (104) et les un ou plusieurs rayons (106) ne sont pas reconfigurés pour une transition entre décollage vertical et atterrissage, vol stationnaire et vol vers l'avant.
